(19) Europäisches Patentamt
European Patent Office
Office européen des brevets

(11) **EP 4 737 611 A1**

(12) **EUROPEAN PATENT APPLICATION**

(43) Date of publication:
**06.05.2026 Bulletin 2026/19**

(21) Application number: **25211714.8**

(22) Date of filing: **28.10.2025**

(51) International Patent Classification (IPC):
**C23C 18/16** (2006.01)    **B01J 20/26** (2006.01)

(52) Cooperative Patent Classification (CPC):
**C23C 18/1617; B01J 20/26**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.10.2024 JP 2024191484**

(71) Applicant: **C. Uyemura & Co., Ltd.**
**Osaka-shi, Osaka 541-0045 (JP)**

(72) Inventors:
• **YAMAMOTO, Hisamitsu**
**Hirakata-shi, Osaka, 573-0065 (JP)**

• **NAKAYAMA, Tomoharu**
**Hirakata-shi, Osaka, 573-0065 (JP)**
• **KOMEDA, Takuya**
**Hirakata-shi, Osaka, 573-0065 (JP)**
• **YOSHIDA, Shinichiro**
**Hirakata-shi, Osaka, 573-0065 (JP)**
• **MATSUMOTO, Kanji**
**Hirakata-shi, Osaka, 573-0065 (JP)**

(74) Representative: **advotec.**
**Patent- und Rechtsanwaltspartnerschaft mbB**
**Widenmayerstraße 4**
**80538 München (DE)**

(54) **METHOD FOR FORMING METAL OXIDE COATING**

(57)    The life of a plating solution used for forming a metal oxide coating is extended to efficiently use the plating solution. A method for forming a metal oxide coating includes: forming a metal oxide coating on a surface of a plating target with a plating solution containing a metal compound to form a coating and a boron compound as a reducing agent; and regenerating the plating solution with an adsorption filter that adsorbs boric acid.

FIG.1

EP 4 737 611 A1

## Description

This application claims priority to Japanese Patent Application No. 2024-191484 filed on October 31, 2024, the disclosure of which including the specification, the drawings, and the claims is hereby incorporated by reference in its entirety.

BACKGROUND

The present disclosure relates to a method for forming a metal oxide coating and a plating equipment for the method.

As a method for forming a metal coating on a surface of a non-conductive plating target such as a glass substrate, a method of performing electroless plating of a metal coating such as copper or gold after forming a zinc oxide coating on a surface of a plating target is known. As a method for forming a zinc oxide coating on a surface of a plating target, methods such as evaporation, spattering, and sol-gel methods are known. Among such methods, an electroless plating method has attracted attention because of easiness in forming a zinc oxide coating on a surface of a plating target.

The electroless plating method of a zinc oxide coating is performed using a plating solution containing zinc nitrate and a boron-based reducing agent such as dimethylaminoborane (DMAB). This method can be performed only by immersing a plating target in the plating solution, and thus, a zinc oxide coating can be easily formed (see, for example, Japanese Patent Application Publication No. 9-278437).

SUMMARY

A plating solution for a zinc oxide coating, however, has the problem of a short life. In the plating solution, the boron-based reducing agent such as DMAB is rapidly decomposed and generates boron. Electroless plating of a zinc oxide coating progresses with involvement of hydroxide ions. Since boric acid in the plating solution inhibits generation of hydroxide ions and zinc hydroxide, deposition ability of the zinc oxide coating rapidly degrades even through zinc ions and the reducing agent sufficiently remain in the plating solution. This causes the necessity for frequently replacing plating solutions.

Such a problem can also arise in formation of a coating of other metal oxides using a reducing agent containing boron as well as the zinc oxide coating.

It is therefore an object of the present disclosure to extend the life of a plating solution for forming a coating of a metal oxide to enable efficient use of a plating solution.

In an aspect of the present disclosure, a method for forming a metal oxide coating includes: forming a coating of a metal oxide on a surface of a plating target with a plating solution containing a metal compound to form a coating, and a boron compound as a reducing agent; and regenerating the plating solution with an adsorption filter that adsorbs boric acid.

In the aspect of the method for forming a metal oxide coating, the plating solution is regenerated with the filter that adsorbs boric acid. Accordingly, the boric acid concentration in the plating solution can be kept low, and thus, the plating solution can be used for a long time. This can significantly enhance productivity.

The method for forming a metal coating according to present disclosure can significantly extend the life of a plating solution and enables efficient coating formation.

BRIEF DESCRIPTION OF THE DRAWINGS

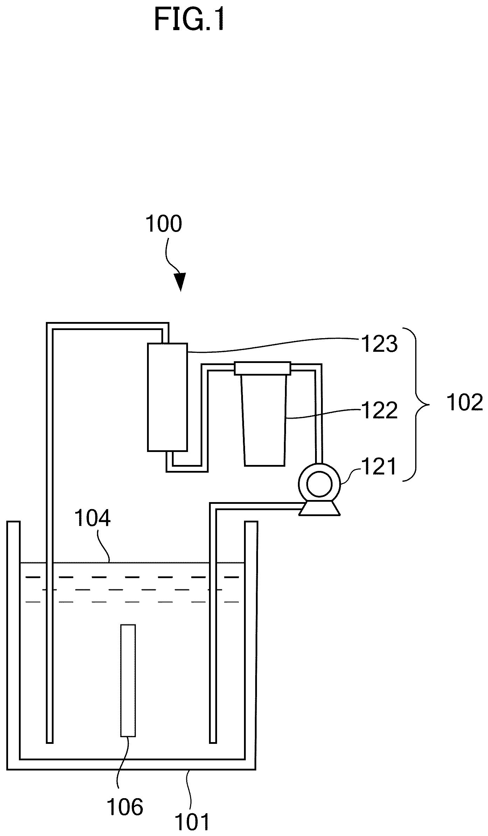

FIG. 1 is a schematic view illustrating an example of a plating equipment for use in a method for forming a metal oxide coating according to the present disclosure.

DETAILED DESCRIPTION

A method for forming a metal oxide coating according to this embodiment can be performed using a plating equipment 100 as illustrated in FIG. 1. The plating equipment 100 includes a plating tank 101 in which a plating solution 104 is placed, and a circulation circuit 102 in which the plating solution 104 placed in the plating tank 101 circulates. The circulation circuit 102 includes a circulation pump 121, a first filter 122, and a second filter 123. The first filter 122 is a typical filtration filter through which foreign matter such as an aggregation in the plating solution 104 is removed. The second filter 123 is a column filled with beads of a chelating resin for selectively removing boric acid. The plating solution 104 is an electroless plating solution of a zinc oxide coating containing zinc nitrate as a metal source, and DMAB as a reducing agent.

The plating target 106 such as a glass substrate is immersed in the plating solution 104 in the plating tank 101, thereby forming a zinc oxide coating on a surface of the plating target 106. In deposition of a zinc oxide coating in the plating solution 104, boric acid and electrons (e-) are generated from DMAB as a reducing agent (Equation 1). Zinc nitrate is dissociated into zinc ions and nitrate ions (Equation 2). Nitrate ions generate nitrite ions and hydroxide ions by water and electrons (Equation 3). Zinc ions are combined with hydroxide ions to form zinc hydroxide, and further, zinc hydroxide changes into zinc oxide so that a zinc oxide coating is deposited on a surface of the plating target 106 (Equations 4 and 5).

$$(CH_3)_2NHBH_3+3H_2O \rightarrow H_3BO_3+(CH_3)_2H_2N^++5H^++6e^- \qquad \text{(Equation 1)}$$

$$Zn(NO_3)_2 \rightarrow Zn^{2+}+2NO_3^- \qquad \text{(Equation 2)}$$

$$NO_3^-+H_2O+2e^- \rightarrow NO_2^-+2OH^- \qquad \text{(Equation 3)}$$

$$Zn^{2+}+2OH^- \rightarrow Zn(OH)_2 \qquad \text{(Equation 4)}$$

$$Zn(OH)_2 \rightarrow ZnO+H_2O \qquad \text{(Equation 5)}$$

Boric acid generated from DMAB has a buffering function, and thus, inhibits reaction of Equation (4). Thus, with the progress of plating reaction, the boric acid concentration in the plating solution 104 increases, and coating formation ability rapidly decreases. It is, therefore, necessary to replace plating solutions 104 every time in general. On the other hand, in this embodiment, boric acid in the plating solution 104 is continuously removed by the second filter 123. This reduces an increase in the boric acid concentration in the plating solution 104 so that the plating solution 104 has an extended life and can be efficiently used.

Generation of boric acid by decomposition of DMAB also progresses even in a state where the plating target 106 is not immersed in the plating solution 104. For this reason, it is preferable to continuously operate the circulation pump 121 to remove boric acid. However, the circulation pump 121 may be operated intermittently. Alternatively, the circulation pump 121 may be operated when the boric acid concentration exceeds a predetermined value, by monitoring the boric acid concentration in the plating solution 104. A plating cycle in which the plating target 106 is immersed in the plating solution 104 and a regeneration cycle in which the circulation pump 121 is operated to remove boric acid in the plating solution 104 to regenerate the plating solution 104 may be alternately performed.

The foregoing description is directed to the configuration of the plating equipment 100 in which the plating solution 104 in the plating tank 101 is circulated by the circulation pump 121 to remove boric acid. Alternatively, a batch-type plating equipment may be used such that the plating solution 104 is taken out from the plating tank 101 to be regenerated and the regenerated plating solution 104 is returned to the plating tank 101 again.

The second filter 123 for removing boric acid is a column filled with chelating resin beads for selectively removing boric acid. The column eases handling and enables efficient liquid contact with the plating solution, thus increasing efficiency in removing boric acid. The column is not limited to beads and may be a column filled with powder, fibers, or other materials. A column filled with large-diameter beads is preferable because clogging and other problems are less likely to occur. Resin beads or resin fibers may be porous beads or porous fibers. This increases the liquid contact area to enhance efficiency in removing boric acid.

The chelating resin may be a resin having a chelating site that selectively forms a chelate with boric acid. The chelating site may have a structure of polyhydric alcohol or catechol having a plurality of hydroxy groups. Among these compounds, the chelating site is preferably a compound having a glucamine group (N-methylglucamine group). A support carrying the chelating site is not limited to resins, and inorganic particles such as silica may be used. As the second filter 123, a column filled with cerium hydroxide, hydrotalcite, or other materials may also be used.

The first filter 122 is not particularly limited, and a nonwoven fabric filter may be used, for example. The first filter 122 may be used when necessary, and may not be used. The first filter 122 may be located downstream of the second filter 123.

In the above-described example, the metal source of the plating solution 104 is zinc nitrate, but the metal source is not limited to zinc nitrate and may be other zinc-containing compounds, such as zinc chloride, zinc carbonate, and zinc sulfate. In the case of forming a metal oxide coating other than zinc oxide, compounds containing cobalt (Co), iron (Fe), manganese (Mn), molybdenum (Mo), aluminum (Al), titanium (Ti), zirconium (Zr), tin (Sn), and silicon (Si), for example, may be used. A concentration of the metal compound as a metal source is appropriately selected depending on the type, application, or other purposes of the coating, and is preferably 0.01 mol/L to 0.2 mol/L , more preferably 0.05 mol/L to 0.09 mol/L.

The reducing agent is not limited to DMAB, and may be a boron-based reducing agent. For example, sodium borohydride and trimethylamine borane (TMAB) may be used, for example. A concentration of the reducing agent is appropriately selected depending on the type, application, or other purposes of the coating, and is preferably 0.0001 mol/L to 0.5 mol/L, more preferably 0.0005 mol/L to 0.3 mol/L, even more preferably 0.001 mol/L to 0.2 mol/L.

The plating solution 104 may be supplemented with a pH adjuster such as nitric acid, hydrochloric acid, or sulfuric acid when necessary, as well as the metal source and the reducing agent. The pH of the plating solution 104 is not particularly limited, and is preferably about 4 to 6. The plating solution 104 can be used at preferably 10°C to 90°C, more preferably 50°C to 80°C. The immersion time of the plating target 106 in the plating solution 104 is selected depending on the type, thickness, application, and other purposes of a required coating, and is preferably 10 minutes to 200 minutes, more preferably 15 minutes to 100 minutes, even more preferably 20 minutes to 30 minutes.

In the method for forming a metal oxide coating according to this embodiment, a concentration of boric acid in the plating solution 104 during use is preferably maintained at 1.0g/L or less, more preferably 0.5g/L or less, even more preferably 0.3g/L or less. By maintaining the concentration at such a level to form a metal oxide coating, the resulting metal oxide coating has a high peel strength.

In the case of continuously using the plating solution 104, the metal source and the reducing agent can be supplied in an amount corresponding to the amount of consumption so that the concentrations of the metal source and the reducing agent do not greatly vary with time. From the viewpoint of forming a constant coating, the concentrations of the metal source and the reducing agent are preferably 90% to 110%, more preferably 95% to 105% of, these initial values during use of the plating solution 104. The pH can be adjusted by adding acid or alkali when necessary.

The plating target in this embodiment may be a material having a hydroxy group (-OH) on a surface of glass or other substances. The target is not limited to glass, and may be a ceramic having hydroxy groups on a surface or a non-conductive material such as a resin. The target may also be a material obtained by performing a surface treatment on a material that does not usually have hydroxy groups to introduce hydroxy groups into the material. The shape of the plating target is not limited to a flat plate such as a substrate, and may be a stereoscopic shape.

The metal oxide formed by the method for forming a metal oxide coating according to this embodiment can be used for improving adhesion layers on difficult-to-plate materials (such as glass) that cannot achieve adhesion at all by general methods.

The foregoing description is directed to the method for forming a zinc oxide coating in this embodiment, but can be similarly applicable to a method for forming another metal oxide coating using a boron-based reducing agent. For example, similar methods can be applied to oxide films such as cobalt (Co), iron (Fe), manganese (Mn), molybdenum (Mo), aluminum (Al), titanium (Ti), tin (Sn), and silicon (Si).

[Examples]

The present disclosure will be described in more detail below with reference to examples. The following examples are illustrative and are not intended to limit the present disclosure.

<Measurement of Zinc Concentration>

A zinc concentration in a plating solution was measured by chelate titration.

<Measurement of Reducing Agent Concentration>

A concentration of a reducing agent in the plating solution was measured by oxidation-reduction titration.

<Measurement of Boric Acid Concentration>

A concentration of boric acid in the plating solution was measured by acid-base titration.

<Measurement of Thickness>

The thickness of a coating was calculated by measuring a difference between a mass before plating and a mass after plating and using an area of a substrate and a density of zinc oxide.

<Measurement of Peel Strength>

A peel strength of a coating was measured with an autograph (manufactured by SHIMADZU CORPORATION, Autograph AGS-X).

<Evaluation of Boric Acid Influence>

A peel strength of a coating obtained by adding boric acid in different amounts to a plating solution and immersing a glass substrate (5 cm × 5 cm) at 80°C for 20 minutes was measured.
In the plating solution, the concentration of zinc nitrate (hexahydrate) was 14.9 g/L (0.05 mol/L), the concentration of DMAB was 1.2 g/L (0.02 mol/L). To 1 L of the plating solution, 1.1 g, 3.1 g, 5.1 g, and 10.1 g of boric acid was added.
A peel strength in the case of adding no boric acid was 900 gf/cm, whereas a peel strength in the case of adding 1.1 g of boric acid was 401 gf/cm. In the case of adding 3.1 g of boric acid, deposition of a coating was observed, but blisters occurred and the coating was easily peeled, resulting in a failure in measuring a peel strength. In the cases of adding 5.1 g and 10.1 g of boric acid, deposition of a coating was not observed.

(Example 1)

In a plating tank of a plating equipment with the configuration illustrated in FIG. 1, 2.8 L of solutions of zinc nitrate (hexahydrate) (14.9 g/L, 0.05 mol/L) were placed, and circulated at 80°C at a flow rate of 450 mL/min. The first filter was a nonwoven fabric filter (manufactured by Nihon Filter Co., Ltd., FSG-1 cartridge filter). The second filter was a column filled with 300 g of a chelating resin (manufactured by Mitsubishi Chemical Corporation, DIAION CRB-05) having N-methylglucamine as a chelating site.
To the plating tank, 1.2 g/L (0.02 mol/L) of DMAB was added, and a glass substrate was immersed in the plating tank. After 20 minutes, the substrate was taken out, and a zinc concentration and a DMAB concentration were measured, and zinc nitrate and DMAB in amounts corresponding to consumption was supplied. The glass substrate was immersed again 5 minutes after the glass substrate was taken out for the first time, thereby performing second coating formation. Similarly, coating formation was repeated 15 times.
From the first time to the 15th time, the thickness of the coating after 20-minute immersion was substantially constant at about 0.2 μm. The peel strength of the coating was in the range from about 600 gf/cm to about 900 gf/cm. From the first time to the 15th time, excellent coatings were formed. The boric acid concentrations after coating formation at the fifth time and the tenth time were 5.4 ppm, and the boric acid concentration after coating formation at 15th time was 20.8 ppm. Table 1 shows the results.

[Table 1]

|  | Thickness (μm) | Peel strength (gf/cm) | Boric acid concentration (ppm) |
|---|---|---|---|
| 1 | 0.20 | 742 |  |
| 2 | 0.17 | 792 |  |
| 3 | 0.19 | 820 |  |
| 4 | 0.20 | 667 |  |
| 5 | 0.20 | 756 | 5.4 |
| 6 | 0.18 | 605 |  |
| 7 | 0.18 | 728 |  |
| 8 | 0.18 | 848 |  |
| 9 | 0.20 | 909 |  |
| 10 | 0.19 | 760 | 5.4 |
| 11 | 0.19 | 832 |  |
| 12 | 0.20 | 871 |  |
| 13 | 0.20 | 874 |  |
| 14 | 0.20 | 633 |  |
| 15 | 0.20 | 664 | 20.8 |

EP 4 737 611 A1

(Comparative Example 1)

Coating formation was performed on a glass substrate in the same manner as that in Example 1 without performing circulation to a filter. A coating at the first time had a thickness of 0.2 μm and a peel strength of 902 gf/cm. However, blisters occurred at the second time, and the peel strength could not be measured.

A method for forming a metal oxide coating according to the present disclosure enables efficient coating formation with a stabilized plating solution and is useful in the field of coating formation.

[1] A method for forming a metal oxide coating includes: forming a coating of a metal oxide on a surface of a plating target with a plating solution containing a metal compound to form a coating, and a boron compound as a reducing agent; and regenerating the plating solution with an adsorption filter that adsorbs boric acid.

[2] The he method according to [1], wherein the adsorption filter includes a chelating resin that selectively adsorbs boric acid.

[3] The method according to [2], wherein the chelating resin is a resin having methylglucamine group as a chelating site.

[4] The method according to any one of [1] to [3], wherein the forming the coating is performed by immersing the plating target in a plating tank containing the plating solution, and the regenerating is performed by causing the plating solution in the plating tank to pass through the adsorption filter to circulate the plating solution.

[5] The method according to [4], wherein the forming the coating and the regenerating are performed simultaneously in parallel.

[6] The method according to any one of [1] to [5], wherein the reducing agent includes dimethylaminoborane (DMAB).

[7] The method according to any one of [1] to [6], wherein the metal is zinc.

[8] A plating equipment comprising: a plating tank in which a plating solution containing a metal compound to form a coating and a boron compound as a reducing agent is placed and a plating target is immersed to form a metal oxide coating on a surface of the plating target; and a plating solution regenerator that regenerates the plating solution in the plating tank, wherein the plating solution regenerator includes an adsorption filter that adsorbs boric acid, and a pump that returns the plating solution in the plating tank to the plating tank through the adsorption filter.

**Claims**

1. A method for forming a metal oxide coating, the method comprising:

   forming a coating of a metal oxide on a surface of a plating target with a plating solution containing a metal compound to form a coating, and a boron compound as a reducing agent; and
   regenerating the plating solution with an adsorption filter that adsorbs boric acid.

2. The method according to claim 1, wherein the adsorption filter includes a chelating resin that selectively adsorbs boric acid.

3. The method according to claim 2, wherein the chelating resin is a resin having methylglucamine group as a chelating site.

4. The method according to any one of claims 1 to 3, wherein

   the forming the coating is performed by immersing the plating target in a plating tank containing the plating solution, and
   the regenerating is performed by causing the plating solution in the plating tank to pass through the adsorption filter to circulate the plating solution.

5. The method according to claim 4, wherein the forming the coating and the regenerating are performed simultaneously in parallel.

6. The method according to any one of claims 1 to 5, wherein the reducing agent includes dimethylaminoborane (DMAB).

7. The method according to any one of claims 1 to 6, wherein the metal is zinc.

8. A plating equipment comprising:

6

a plating tank in which a plating solution containing a metal compound to form a coating and a boron compound as a reducing agent is placed and a plating target is immersed to form a metal oxide coating on a surface of the plating target; and

a plating solution regenerator that regenerates the plating solution in the plating tank, wherein

the plating solution regenerator includes an adsorption filter that adsorbs boric acid, and a pump that returns the plating solution in the plating tank to the plating tank through the adsorption filter.

# FIG.1

## EUROPEAN SEARCH REPORT

**Application Number**

EP 25 21 1714

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2017 048414 A (CANON COMPONENTS KK) 9 March 2017 (2017-03-09) * paragraph [0048] * | 1-8 | INV. C23C18/16 B01J20/26 |
| A | JP 2002 241951 A (UYEMURA C & CO LTD) 28 August 2002 (2002-08-28) * claim 1 * | 1-8 | |
| A | JP 2002 226517 A (MITSUBISHI CHEM CORP; NIPPON RENSUI KK) 14 August 2002 (2002-08-14) * paragraphs [0008] - [0029] * * example 1 * | 1-8 | |
| A | JP 2013 063414 A (CLEANTECH INC) 11 April 2013 (2013-04-11) * paragraphs [0043] - [0062] * | 1-8 | |

**TECHNICAL FIELDS SEARCHED (IPC)**

C23C
B01J

The present search report has been drawn up for all claims

| Place of search | Date of completion of the search | Examiner |
|---|---|---|
| The Hague | 13 March 2026 | Le Hervet, Morgan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 737 611 A1

| Patent document cited in search report | | Publication date | Patent family member(s) | | Publication date |
|---|---|---|---|---|---|
| JP 2017048414 | A | 09-03-2017 | NONE | | |
| JP 2002241951 | A | 28-08-2002 | JP 4600623 B2 | | 15-12-2010 |
| | | | JP 2002241951 A | | 28-08-2002 |
| JP 2002226517 | A | 14-08-2002 | JP 3758505 B2 | | 22-03-2006 |
| | | | JP 2002226517 A | | 14-08-2002 |
| JP 2013063414 | A | 11-04-2013 | JP 5400845 B2 | | 29-01-2014 |
| | | | JP 2013063414 A | | 11-04-2013 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024191484 A

- JP 9278437 A